# EUROPEAN PATENT APPLICATION

(11) **EP 1 133 172 A2**
(43) Date of publication of application: **12.09.2001**
(21) Application number: 01302188.6
(22) Date of filing: 09.03.2001
(51) Int. Cl.: H04N 5/44

(54) **Method of communication using digital TV receiver and the internet**

(30) Priority: 09.03.2000 JP 2000071049
(71) Applicant: NEC CORPORATION, Tokyo (JP)
(72) Inventor: Takai, Kazuhito, Tokyo (JP)
(74) Representative: Moir, Michael Christopher

(57) **Abstract**

In a method of communicating, information about an article or service is received by a receiving terminal as a digital TV broadcast signal. Source data relating to a URL address of a homepage of a source of the information is extracted from the information by the receiving terminal in response to a request from a user. Communication is carried out between the receiving terminal and the source via the Internet based on the extracted source data.

## Description

### BACKGROUND OF THE INVENTION

### 1. Field of the Invention

The present invention relates to a method of communication using a digital TV and the Internet.

### 2. Description of the Related Art

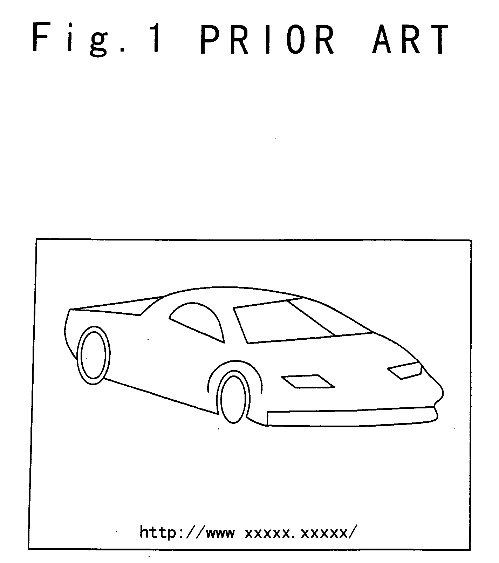

In conventional schemes for providing information in a TV broadcasting system, as shown in Fig. 1, a URL address of a homepage of a source is displayed as a group of characters on a television (TV) screen.

However, the conventional information contained in TV broadcasting has the following drawbacks.

Firstly, the address of the homepage has to be written on paper or memorized quickly while the information is briefly displayed, and then has to be typed to access the homepage from a separate Internet terminal.

Secondly, even if the viewer or user is very interested in articles or services offered in the program information, it may be difficult to write or memorize the address of the homepage quickly over a short time period, while the information is being displayed. If the viewer is busy writing or memorizing the address, attention to the articles or service may be reduced, and fades out at the end of the display.

In conjunction with the above description, an image data processing apparatus is described in Japanese Laid-Open Patent Application (JP-A-Heisei 10-155151). In this reference, compression-coded digital-image data is decoded into data in a space-frequency region by a variable-length-code decoding unit (80) and a dequantizing unit (90). A unit (120) detects an electronic watermark from the decoded data. A display unit (130) displays the detected result.

### SUMMARY OF THE INVENTION

An object of the preferred embodiments of the present invention is to provide a method of communication in which more detailed information can be acquired immediately.

Another object of the preferred embodiment of the present invention is to implement a method of communication in which a user can communicate with a source based on a URL address or an e-mail address embedded in received information.

Still another object is to implement a method of communication in which a user can take steps toward obtaining an article or service from a source when the program information on the article or service is broadcast.

Broad aspects of the invention are as defined in the independent claims.

In a more specific aspect of the present invention, a method of advertising and selling an article or a service is attained by: (a) receiving a commercial program about the article or the service for digital TV broadcasting by a receiving terminal; (b) extracting advertiser data relating to a URL address of a homepage of an advertiser of the commercial program from the commercial program by the receiving terminal in response to a request from a user; and, (c) communicating between the receiving terminal and the advertiser via the Internet based on the extracted advertiser data.

The communicating step (c) may be attained by viewing the homepage of the advertiser on the Internet based on the extracted advertiser data in response to the transmission request data to acquire more detailed information about the article or the service from the advertiser. In this case, further, a transaction of the article or the service with the advertiser may be taken based on the homepage of the advertiser on the Internet.

Also, the communicating step (c) may be attained by automatically communicating between the receiving terminal and the advertiser via the Internet based on the extracted advertiser data in response to the extraction of the advertiser data.

Instead, the extracting step (b) may be attained by:
extracting the advertiser data from the commercial program in response to the request; and, storing the extracted advertiser data in a storage unit. In this case, the communicating step (c) may be attained by reading out the extracted advertiser data from the storage unit in response to a communication request, and by communicating between the receiving terminal and the advertiser via the Internet, based on the readout advertiser data.

Also, the request may be generated from a remote controller through an operation of the remote controller by a user.

Also, the advertiser data may be embedded in the commercial program in a form of multiplexed data, or electronically-watermarked in the commercial program using an electronic-watermark technique.

In another aspect of the present invention, a method of advertising and selling an article or a service is attained by: (a) receiving a commercial program about the article or the service for digital TV broadcasting by a receiving terminal; (b) extracting advertiser data relating to an E-mail address of a advertiser of the commercial program from the commercial program by the receiving terminal in response to a request from a user; and, (c) communicating between the receiving terminal and the advertiser via the Internet, based on the extracted advertiser data.

The communicating step (c) may be attained by: transmitting a question from the receiving terminal to the e-mail address of the advertiser; and, transmitting an answer of the question from the advertiser to the receiving terminal.

Also, the communicating step (c) may be attained by: transmitting an opinion from the receiving terminal to the e-mail address of the advertiser; and, summing-up a plurality of the opinions at the advertiser. In this case, a homepage of the advertiser may be updated based on the summing result at the advertiser.

Also, the communicating step (c) may be attained by automatically communicating between the receiving terminal and the advertiser via the Internet based on the extracted advertiser data in response of the extraction of the advertiser data.

Also, the extracting step (b) may be attained by: extracting the advertiser data from the commercial program in response to the request; and, storing the extracted advertiser data in a storage unit. In this case, the communicating step (c) may be attained by: reading out the extracted advertiser data from the storage unit in response to a communication request; and, communicating between the receiving terminal and the advertiser via the Internet, based on the readout advertiser data.

Also, the request may be generated from a remote controller through an operation of the remote controller by a user.

Also, the advertiser data may be embedded in the commercial program in a form of multiplexed data, or electronically-watermarked in the commercial program using an electronic-watermark technique.

### BRIEF DESCRIPTION OF THE DRAWINGS

Preferred features of the present invention will now be described, by way of example only, with reference to the accompanying drawings, in which:
Fig. 1 is a diagram showing an example of a conventional commercial program;
Fig. 2 is a diagram showing the configuration of a system in the present invention used by a method for advertising and selling the articles or services using a digital TV and the Internet;
Fig. 3 is a flowchart of the method of advertising and selling according to a first embodiment of the present invention; and,
Fig. 4 is a diagram showing an example of a commercial program in the method of advertising and selling according to a third embodiment of the present invention.

### Description of the Preferred Embodiments

Hereinafter, a method of advertising and selling articles or services of the present invention will be described below in detail with reference to the attached drawings.

According to the present invention, a URL address of a homepage of an advertiser as advertiser data is embedded in a commercial program in digital TV broadcasting. A user or viewer can receive the commercial program by use of a receiving terminal which extracts the URL address from the commercial program, and transmits a request of detailed information of the article or service (including relevant performances) or a request to purchase the article or service to the homepage from the terminal through the Internet. At that time, the homepage is displayed on the terminal and the user can purchase the article or service.

### <First Embodiment>

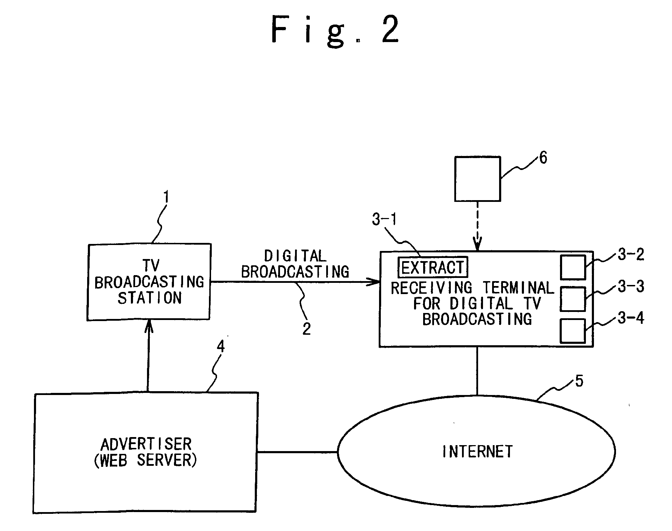

Fig. 2 is a block diagram showing the configuration of the first embodiment of the present invention. As shown in Fig. 2, an advertiser 4 as a CM sponsor transfers its commercial program to a broadcasting station 1. A homepage address of the advertiser 4 is embedded in the commercial program. The advertiser asks the broadcasting station 1 to broadcast the commercial program in a scheduled programs list as a digital broadcasting program 2. The scheme of transferring the commercial program to the station 1 is not limited.

A digital broadcasting receiving terminal 3 is composed of an extracting section 3-1, a storage section 3-2. Also, a user has a remote controller 6 to control the receiving terminal 3.

The user receives the digital broadcasting program 2 by the digital broadcasting receiving terminal 3 which is connectable to the Internet 5. When finding an interested article or service (including action and relevant action attributed to the article), the user operates the remote controller 6 to output a request signal to the digital broadcasting receiving terminal 3.

Upon receiving the request signal from the remote controller 6, the extracting section the digital broadcasting receiving terminal 3 extracts the URL address of the homepage of the advertiser from the commercial program. In response to the extraction, the receiving terminal 3 accesses a Web server 4 of the advertiser which is linked to the Internet 5 to receive and display detailed information about the article or service on a display section. Thus, the user can acquire the detailed information about the article or service received from the homepage of the advertiser. When wanting to purchase the article or service, the user can place an order to the homepage. When receiving the order for the article or service from the user, the Web server 4 of the advertiser books the order and dispatches the article or service to the user. The payment for the order may be carried out over the Internet, but not limited to it.

In this way, in the present invention, the URL address of the homepage is embedded or superimposed on the commercial program in a digital TV broadcasting. As a result, detailed information about the article or service offered in the commercial program broadcasted can be received over the Internet by every user. Also, if desired, the article or service offered can be purchased over the Internet. The payment for the article or service may be conducted as described previously.

Fig. 2 shows the configuration of a system of the first embodiment of the present invention for implementing the method of advertising and selling articles or services utilizing a digital broadcasting receiver terminal and the Internet. The scheme of transferring the commercial program to the broadcasting station 1 is not limited. The commercial program may be handed to the broadcasting station 1 directly or in the form of a record saved on a recording medium, or may be transferred via an appropriate communication network.

As shown in Fig. 2, the broadcasting station 1 provides a digital TV broadcasting service. The broadcasting station 1 broadcasts the commercial program received from the advertiser 4 in the broadcasting schedule. The advertiser 4 produces the commercial program and embeds or inserts into the commercial program, the (URL) address of the homepage for more detailed information about its advertised article or service.

A method of embedding or inserting is not limited. The URL address may be displayed at a part of the display screen of the receiving terminal or may not be directly displayed on the screen. Also, the commercial program may be stored in a storage section 3-2 and the URL address may be displayed when the commercial program is played back. Instead, the URL address is directly invisible to the user, and the homepage may be automatically accessed when the commercial program saved in the storage section 3-2 is played back.

The digital broadcasting receiving terminal 3 receives the digital broadcasting program 2 from the broadcasting station 1. The digital broadcasting receiving terminal 3 is connected to the Internet 5 and can access any homepage when desired. The digital broadcasting receiving terminal 3 may be connected to the Internet always or when desired.

The remote controller 6 is provided to allow the user to operate the digital broadcasting receiving terminal 3 while viewing the commercial program of interest. The Web server 4 of the advertiser is also connected to the Internet 5 to offer more detailed information about its article or service and to receive orders from users over the Internet.

Alternatively, a storage section 3-3 may be provided for recording the operation of users accessing to the Internet to protect the right of each user. The transaction conditions with the advertiser 4 are recorded in the storage section 3-3, and the date and time of the transaction are recorded. These data may be saved for cancellation of the transaction from the user for a cleaning off system, or until the guarantee period of articles or services is ended.

Also, in the above description, when the remote controller 6 is operated by the user, the homepage is automatically accessed. However, when the remote controller 6 is operated by the user, the URL address is extracted and stored in a storage section 3-4. The user may read out one of the stored URL address later, and access the homepage corresponding to the read out URL address.

Next, the embodiment shown in Fig. 2 will be now described in more detail.

As shown in Fig. 2, the broadcasting station 1 provides a digital broadcasting program over a BS or CS satellite, a ground wave network, or a cable network. When receiving a commercial program from the advertiser 4, the broadcasting station 1 inserts the commercial program in a scheduled programs list before the broadcasting.

The advertiser 4 may produce the commercial program by multiplexing and embedding in the commercial program, the URL address of its homepage as the advertiser data different from a general program. Also, the advertiser 4 may produce the commercial program by electronic watermarking the advertiser data using electronic watermark technique. According to the present invention, any other item, e.g., the name of the advertiser, a password or encrypted data may be embedded in the commercial program together with the URL address. Thus, the user can access to the homepage over the Internet. Every applicable technique for multiplexing or electronic watermarking may be used for the purpose as covered by this embodiment. The remote controller 6 may be provided to respond to such encrypted or encoded data for ease of access to a particular site demanded by the user. Also, when detecting and extracting the encoded data, the desired site may be automatically accessed over the Internet.

For example, as an example of multiplexing data, the data is multiplexed and embedded in a stream of video data (including a transport stream). One of the electronic watermark techniques is disclosed in Japanese Laid Open Patent Application (JP-A-Heisei 10-155151) and it may be employed. The present invention covers the use of the electronic watermark technique for advertising articles or services, which is however described in no more detail.

The user receives by the digital broadcasting receiving terminal 3, the digital broadcasting program 2 broadcast from the station 1. The digital broadcasting receiving terminal 3 is sufficient to be linkable to the Internet 5, and is not limited. Alternatively, a function of receiving digital broadcasting programs may be added to a data processing apparatus, or a function of linking to the Internet 5 may be added to a television set having a function to receive the digital broadcasting program. Also, a function to link to the Internet 5 may be added to a digital broadcasting receiver set-top box. In any case, when being possible to access homepages and exchange electronic mails over the Internet 5, it may be used as the terminal.

While viewing the commercial program of interest so that a wish of purchasing is evoked, the user operates the remote controller 6, in which an array of button switches are arranged, and transfers its wish to the advertiser. The Web server 4 of the advertiser is linked with the Internet 5 for providing more detailed information about the articles or services and receiving orders from the users.

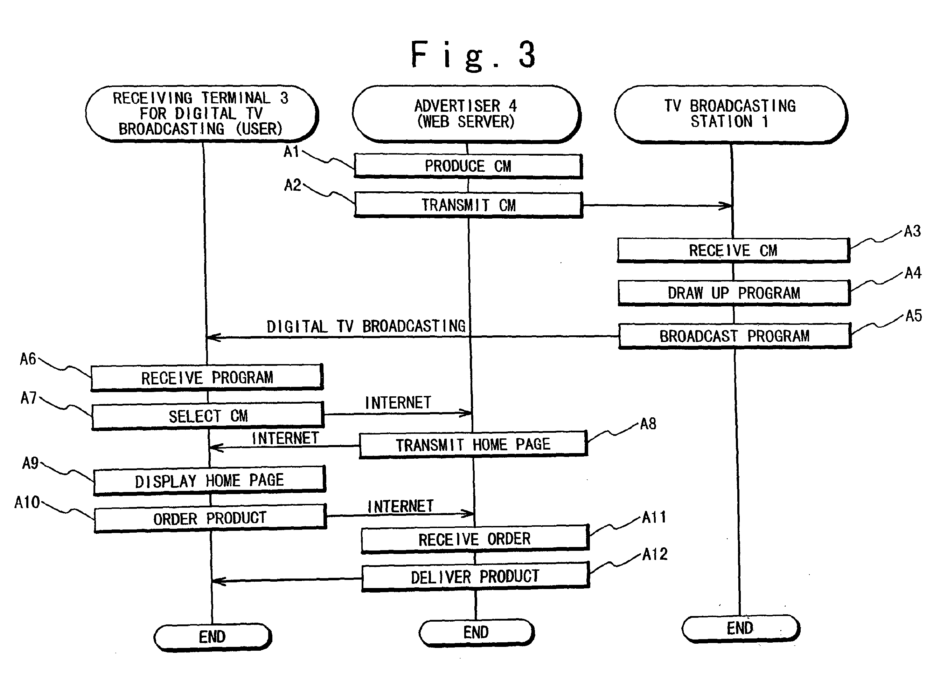

The operation of the system will now be described in more detail referring to Fig. 3.

As shown in Fig. 3, the advertiser 4 produces a commercial program and embeds encoded data of the URL address of its homepage into the commercial program as described previously (Step A1). The commercial program embedded with the encoded data of the homepage address is then transferred to the broadcasting station 1 (Step A2). The transferring (delivering) method is not limited, as described previously.

The commercial program is received by the broadcasting station 1 (Step A3). The broadcasting station 1 inserts the commercial program in a scheduled programs list in accordance with a broadcasting schedule (Step A4). Then, the broadcasting station 1 broadcasts the commercial program to users in accordance with its broadcasting schedule (Step A5). The commercial program is received by the digital broadcasting receiving terminal 3 (Step A6). When finding the interested commercial program, the user operates the terminal 3 and sends a message indicating its interest in articles or services offered in the commercial program to either of the advertiser, manufacturer, provider, or seller of the articles or service (Step A7). When receiving the input from the user, the digital broadcasting receiving terminal 3 extracts the URL address of the homepage from the commercial program and sends a request for more detailed information about the articles or services over the Internet 5 based on the extracted URL address. The Web server of the advertiser 4 transmits data of the homepage to the digital broadcasting receiving terminal 3 over the Internet 5 in response to the request from the user (Step A8).

The digital broadcasting receiving terminal 3 receives and displays the data of the homepage on its screen (Step A9). The user then views the more detailed information about the articles or services and operates the digital broadcasting receiving terminal 3 to set an order of purchase over the Internet 5 when wants to buy an article or service, (Step A10). The order is then received by the Web server 4 of the advertiser (Step A11). Then, the Web server instructs the delivery of the article or service to the user. Thus, the article or service is delivered to the user (Step A12). In this case, the payment for the order may also be conducted over the Internet 5. The payment may be carried out using an electronic money system, a bank account, a money order, or any other known manner. The homepage may be optionally displayed at the Step A9 on at least a part of the display screen of the digital broadcasting receiving terminal 3, saved in a memory or server, or printed down to inform the user of the more detailed information.

### <Second Embodiment>

The second embodiment of the present invention is substantially similar in the arrangement to the first embodiment.

A mail address of the advertiser is embedded in the commercial program in place of the homepage address. This allows the user to operate the digital broadcasting receiving terminal 3 for automatically starting a mailing software program to send a message including a question or opinion about the commercial program or the articles or services offered in the commercial program to the advertiser. In this way, the advertiser can receive the messages from the users at real time. Accordingly, the advertiser can improve the articles or services in the quality or offer a user-friendly sales method. Also, the method of advertising the articles or services as well as the method of selling the same or the homepage can be corrected and improved to meet the requirement of the users.

Also, the homepage of the advertiser may be modified through learning from the messages. As the method of commercial program and the method of sales are made sophisticated, a more number of the users can pay attentions for purchasing the articles or services.

### <Third Embodiment>

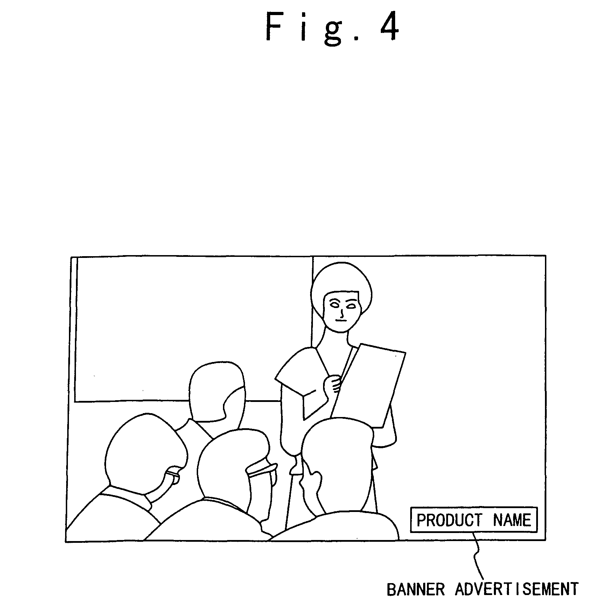

The third embodiment of the present invention will now be described. The third embodiment is substantially similar in the arrangement to the first embodiment. However, the homepage address or the mail address (of E-mail) are not directly embedded in the commercial program by the advertiser. A banner advertisement is displayed at a part of the display screen on which a program is displayed, as shown in Fig. 4. The banner includes data such as the URL address of the homepage, for accessing to the homepage over the Internet. When the banner is selected by the user operating the remote controller 6 of the digital broadcasting receiving terminal 3, the digital broadcasting receiving terminal 3 takes out the homepage address or address data (including E-mail address, and postal address) embedded in the banner advertisement. The addresses are uses to receive more detailed information from the Web server of the advertiser over the Internet. The following steps are identical to those of the first embodiment. The third embodiment is not limited to the banner. Another method may be adopted and is sufficient to be possible to access the Internet.

The remote controller 6 used in this embodiment is not limited to but may be a keyboard, a display touch panel, or any section for entering a message of the user through remote-controlled operation with light, sound, or the like. Any type of remote controller 6 can be used for producing a message of the user. This teaching is also applicable to the other embodiments.

As set forth above, the present invention has the following advantages.

Firstly, as the address of a homepage is embedded in an commercial program or program broadcasted in a digital broadcasting system, the viewer or user can acquire more detailed information about articles or services offered in the commercial program or program and when desired, order and purchase the articles or services over the Internet.

Secondly, as the address of an E-mail is embedded in an commercial program or program broadcasted in a digital broadcasting system, the viewer or user can send a message or opinion about the articles or services offered in the commercial program or program to the advertiser over the Internet.

While the present invention has been described in its preferred embodiments, it is to be understood that the words which have been used are words of description rather than limitation, and that changes may be made to the invention without departing from its scope as defined by the appended claims.

Each feature disclosed in this specification (which term includes the claims) and/or shown in the drawings may be incorporated in the invention independently of other disclosed and/or illustrated features.

The text of the abstract filed herewith is repeated here as part of the specification.

In a method of communicating, information about an article or service is received by a receiving terminal as a digital TV broadcast signal. Source data relating to a URL address of a homepage of a source of the information is extracted from the information by the receiving terminal in response to a request from a user. Communication is carried out between the receiving terminal and the source via the Internet based on the extracted source data.

## Claims

1. A method of communication, comprising the steps of:
(a) receiving, by a receiving terminal, information as part of a digital TV broadcast signal;
(b) extracting, by said receiving terminal, data relating to a reply addressee for said information in response to a request from a user; and,
(c) communicating between said receiving terminal and said addressee via the Internet based on said extracted data.

2. The method according to claim 1, wherein said extracted data includes a URL address of a website of said reply addressee on the Internet, and wherein said communicating step (c) comprises the step of viewing said website of said reply addressee on the Internet based on said extracted data in response to a transmission request.

3. The method according to claim 2, further comprising the steps of:
acquiring information about an article or service from said reply addressee; and,
affecting an electronic transaction via the Internet to obtain the article or the service.

4. The method according to any of claims 1 to 3, wherein said extracted data includes an e-mail address of said reply addressee, and wherein said communicating step (c) comprises the steps of:
transmitting a question from said receiving terminal to said e-mail address of said reply addressee; and,
transmitting an answer of the question from said reply addressee to said receiving terminal.

5. The method according to any of claims 1 to 4, wherein said extracted data includes an e-mail address of said reply addressee, and wherein said communicating step (c) comprises the steps of:
transmitting an opinion from said receiving terminal to said e-mail address of said reply addressee; and,
summing-up a plurality of said opinions at said reply addressee.

6. The method according to claim 5, further comprising the steps of:
updating a homepage of said reply addressee based on the summing result at said reply addressee.

7. The method according to any of claims 1 to 6, wherein said communicating step (c) comprises the step of automatically communicating between said receiving terminal and said reply addressee via the Internet based on said extracted data in response to the extraction of said data.

8. The method according to any of claims 1 to 6, wherein said extracting step (b) comprises the steps of:
extracting said data from said information in response to the request; and,
storing said extracted data in a storage unit; and wherein said communicating step (c) comprises the steps of:
reading out said extracted data from said storage unit in response to a communication request; and,
communicating between said receiving terminal and said reply addressee via the Internet based on said readout data.

9. The method according to any of claims 1 to 8, wherein said request is generated from a remote controller through an operation of the remote controller by a user.

10. The method according to any of claims 1 to 9, wherein said data is embedded in said information as a form of multiplexed data.

11. The method according to any of claims 1 to 9, wherein said data is electronically-watermarked in said information using an electronic-watermark technique.

12. A communication apparatus comprising:
(a) means for receiving a digital TV broadcast signal;
(b) means configured to extract, from said signal, data relating to a reply addressee in respect of transmitted information contained in said signal in response to a request from a user; and,
(c) means for communicating, via the Internet based on said extracted data, with said reply addressee through the receiving terminal.

13. A digital TV broadcast signal carrying information about an article or service, and data relating to a reply addressee in respect of said information, said data being extractable from the signal by a receiving terminal in response to a request from a user, the extracted data being in a format enabling the receiving terminal to communicate with the reply addressee via the Internet.
